(19) Europäisches Patentamt
European Patent Office
Office européen des brevets

(11) **EP 4 730 268 A1**

(12) **EUROPEAN PATENT APPLICATION**
published in accordance with Art. 153(4) EPC

(43) Date of publication:
**22.04.2026 Bulletin 2026/17**

(21) Application number: **24823112.8**

(22) Date of filing: **24.04.2024**

(51) International Patent Classification (IPC):
**G06T 15/00** (2011.01)     **G09G 5/00** (2006.01)

(52) Cooperative Patent Classification (CPC):
**G06T 15/00; G09G 5/00**

(86) International application number:
**PCT/JP2024/015970**

(87) International publication number:
**WO 2024/257490 (19.12.2024 Gazette 2024/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.06.2023 JP 2023098471**

(71) Applicant: **Sony Group Corporation
Tokyo 108-0075 (JP)**

(72) Inventor: **KOBAYASHI, Goh
Tokyo 108-0075 (JP)**

(74) Representative: **D Young & Co LLP
3 Noble Street
London EC2V 7BQ (GB)**

(54) **IMAGE PROCESSING DEVICE, IMAGE PROCESSING METHOD, AND IMAGE DISPLAY SYSTEM**

(57)     An image processing apparatus according to an embodiment of the present technology includes a segmentation processing unit and a transmission unit. The segmentation processing unit segments, on the basis of a positional relationship between a first display and a second display of a tiling display and a field of view of a user of the tiling display, 3D model data to be displayed on the tiling display into first partial model data and second partial model data respectively corresponding to the first display and the second display. The transmission unit transmits the first partial model data and the second partial model data respectively to a first display processing apparatus and a second display processing apparatus which are configured to respectively control the first display and the second display.

FIG.2

EP 4 730 268 A1

## Description

Technical Field

The present technology relates to an image processing apparatus, an image processing method, and an image display system.

Background Art

Patent Literature 1 discloses a tiling display in which a plurality of unit panels cooperate to operate as a single display. In this tiling display, pixels are arranged such that an interval between pixels that are adjacent to each other across the unit panels is equal to or larger than an interval between pixels that are adjacent to each other within the same unit panel. This makes it possible to display an image in such a way that seams are not noticeable during viewing.

Citation List

Patent Literature

Patent Literature 1: Japanese Patent Application Laid-open No. 2021-103209

Disclosure of Invention

Technical Problem

In such a tiling display, a technology that enables a processing load of rendering to be reduced is demanded.
In view of the circumstances as described above, the present technology aims at providing an image processing apparatus, an image processing method, and an image display system that are capable of reducing the processing load of rendering.

Solution to Problem

To achieve the object described above, an image processing apparatus according to an embodiment of the present technology includes a segmentation processing unit and a transmission unit. The segmentation processing unit segments, on the basis of a positional relationship between a first display and a second display of a tiling display and a field of view of a user of the tiling display, 3D model data to be displayed on the tiling display into first partial model data and second partial model data respectively corresponding to the first display and the second display. The transmission unit transmits the first partial model data and the second partial model data respectively to a first display processing apparatus and a second display processing apparatus which are configured to respectively control the first display and the second display.

An image processing method according to an embodiment of the present technology includes segmenting, on the basis of a positional relationship between a first display and a second display of a tiling display and a field of view of a user of the tiling display, 3D model data to be displayed on the tiling display into first partial model data and second partial model data respectively corresponding to the first display and the second display. The first partial model data and the second partial model data are respectively transmitted to a first display processing apparatus and a second display processing apparatus which are configured to respectively control the first display and the second display.

An image display system according to an embodiment of the present technology includes the first display, the second display, the first display processing apparatus, the second display processing apparatus, and the image processing apparatus. The first display processing apparatus and the second display processing apparatus execute culling processing and rendering processing on the first partial model data and the second partial model data that have been received, and control display of the first partial model data and the second partial model data that have been subjected to the culling processing and the rendering processing, with respect to the first display and the second display.

Brief Description of Drawings

[Fig. 1] A schematic diagram showing a state where a 3D model is displayed on a tiling display.
[Fig. 2] A schematic diagram showing a configuration example of an image display system.

[Fig. 3] A schematic diagram showing a 3D model, model arrangement information, and display position information.
[Fig. 4] A schematic diagram showing animation data.
[Fig. 5] A schematic diagram showing viewing range information.
[Fig. 6] A flowchart showing a processing example of a calculation of a visibility volume.
[Fig. 7] A schematic diagram showing processing of projecting vertices on a display.
[Fig. 8] A flowchart showing a processing example of a bone segmentation.
[Fig. 9] A schematic diagram showing bone information.
[Fig. 10] A flowchart showing a processing example of vertex removal.
[Fig. 11] A schematic diagram showing segmentation processing and removal processing.
[Fig. 12] A flowchart showing a processing example of setting of boundary information.
[Fig. 13] A schematic diagram showing the boundary information.
[Fig. 14] A schematic diagram showing an optimized 3D model.
[Fig. 15] A schematic diagram showing culling processing, rendering processing, and display control processing.
[Fig. 16] A schematic diagram showing the culling processing, the rendering processing, and the display control processing.
[Fig. 17] A schematic diagram showing an image display system according to a comparative example.
[Fig. 18] A block diagram showing a hardware configuration example of a computer capable of realizing a parent PC and a child PC.

Modes for Carrying Out the Invention

Hereinafter an embodiment according to the present disclosure will be described with reference to the drawings.

[Image display system]

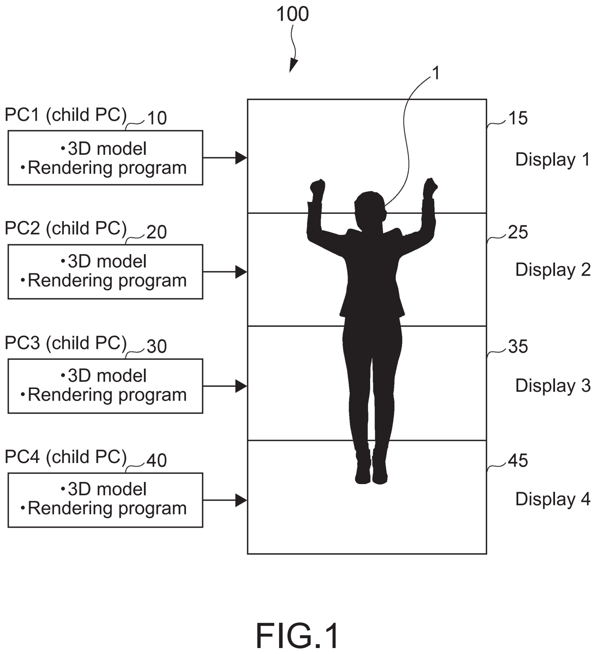

Fig. 1 is a schematic diagram showing a state where a 3D model is displayed on a tiling display. As shown in Fig. 1, in an image display system 100 according to the present embodiment, a 3D model 1 is displayed on a plurality of displays. The 3D model 1 is an image that can be viewed stereoscopically, and a user can view the 3D model 1 stereoscopically by viewing the display while wearing dedicated glasses, for example. Alternatively, a naked-eye stereoscopic display may be used as the display so that the user can view the 3D model 1 stereoscopically without wearing dedicated equipment.
In the present example, a human-type model is displayed as the 3D model 1, but the type of 3D model 1 is not limited, and an object such as a ball or an apple may also be displayed, for example. The 3D model 1 corresponds to an embodiment of 3D model data according to the present technology.
In the present example, four displays 15, 25, 35, and 45 are arranged so as to be aligned vertically, and these displays cooperate to display one 3D model 1. Specifically, the display 15 at the top displays a head and both hands of a person. Further, the second display 25 displays an upper half of a body of the person. The other displays 35 and 45 also display parts of the person. Such a display that displays one image using a plurality of unit panels is called a tiling display, which is used as means for displaying large images without using a huge panel.
In the present embodiment, one PC (Personal Computer) is provided with respect to one display. That is, display control is executed individually by individual PCs instead of performing display control of an image with respect to each display by one common PC. Since a volume of image data to be rendered becomes extremely large in the tiling display, a configuration in which, as in the present example, a dedicated PC is provided for each display so as to distribute rendering processing to each of the displays is adopted in many cases.
A PC1 (child PC 10) is provided with respect to the display 15 at the top. The child PC 10 executes culling processing and rendering processing on the 3D model 1, and controls the display of the processed image on the display 15. Similarly, PCs 2, 3, and 4 (child PCs 20, 30, and 40) are provided with respect to the displays 25, 35, and 45, respectively.

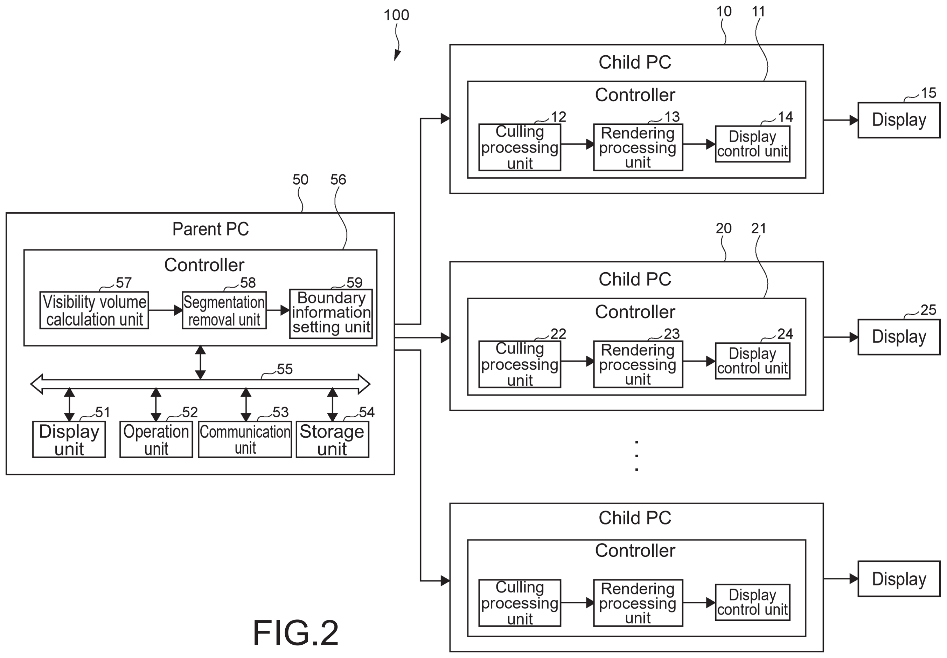

Fig. 2 is a schematic diagram showing a configuration example of the image display system 100. The image display system 100 includes a parent PC 50, the plurality of child PCs, and the plurality of displays. Although the image display system 100 includes four child PCs 10 to 40 in the example shown in Fig. 1, the specific number of child PCs is not limited and may be any number corresponding to the number of displays. Fig. 2 shows the plurality of child PCs including the child PCs 10 and 20.
Similar to the child PCs, the number of displays is also not limited. Further, while the displays 15 to 45 are arranged so as to be aligned vertically in Fig. 1, it is also possible to adopt an arrangement in which the displays are arranged horizontally or an arrangement in which the displays are arranged in a grid pattern. The shape of the display is not limited to a rectangular shape. Fig. 2 shows the plurality of displays including the displays 15 and 25.
The parent PC 50 includes a display unit 51, an operation unit 52, a communication unit 53, a storage unit 54, and a controller 56. These blocks are mutually connected via a bus 55. The blocks may alternatively be connected using a communication network, a non-standardized unique communication method, or the like instead of using the bus 55.

The display unit 51 is a display device that uses, for example, liquid crystal, EL, or the like, and displays various images that show states of the parent PC 50, GUIs (Graphical User Interfaces) used for setting, and the like.

The operation unit 52 is, for example, a keyboard, a pointing device, a touch panel, or other operation devices. When the operation unit 52 includes a touch panel, the touch panel may be integrated with the display unit 51.

The communication unit 53 is a communication module for communicating with other devices via a network such as a LAN (Local Area Network) or a WAN (Wide Area Network). A wireless LAN module such as Wi-Fi or a communication module for short-range wireless communication such as Bluetooth® may also be provided. Furthermore, communication equipment such as a modem or a router may also be used.

The storage unit 54 is a storage device such as a non-volatile memory, and an HDD (Hard Disk Drive), an SSD (Solid State Drive), or the like is used, for example. Any other computer-readable, non-transitory storage medium may also be used. The storage unit 54 stores a control program for controlling overall operations of the parent PC 50. A method of installing the control program in the parent PC 50 is not limited. For example, the program may be installed via various recording media, or may be installed via the Internet or the like.

The controller 56 includes hardware necessary for configuring a computer, the hardware including a processor such as a CPU, a GPU, or a DSP, memories such as a ROM and a RAM, a storage device such as an HDD, and the like. For example, the CPU loads a program according to the present technology, which is recorded in the ROM or the like in advance, into the RAM and executes the program, to thus execute an image processing method according to the present technology. As the controller 56, for example, a PLD (Programmable Logic Device) such as an FPGA (Field Programmable Gate Array), or other devices such as an ASIC (Application Specific Integrated Circuit) may be used.

In the present embodiment, the CPU of the controller 56 executes the program (e.g., application program) according to the present technology to realize a visibility volume calculation unit 57, a segmentation removal unit 58, and a boundary information setting unit 59 as functional blocks. It is noted that dedicated hardware such as an IC (integrated circuit) may be used as appropriate to realize each of the functional blocks.

The visibility volume calculation unit 57 calculates a visibility volume. The visibility volume is a parameter that indicates to what extent each part of the 3D model 1 is to be displayed. Hereinafter, for simplicity, the visibility volume and the visibility volume calculation unit 57 may be abbreviated as VV and the VV calculation unit 57. The segmentation removal unit 58 generates an optimized 3D model. The boundary information setting unit 59 generates boundary information. Specific contents and generation methods of the VV, the optimized 3D model, and the boundary information will be described later. The parent PC 50 corresponds to an embodiment of an image processing apparatus according to the present technology.

The child PC 10 includes a controller 11. Further, although illustrations are omitted, the child PC 10 may include mechanisms such as a display unit, similar to the parent PC 50. In the present embodiment, a CPU of the controller 11 executes a program according to the present technology, to thus realize a culling processing unit 12, a rendering processing unit 13, and a display control unit 14 as functional blocks.

The culling processing unit 12 executes the culling processing on the optimized 3D model. The rendering processing unit 13 executes the rendering processing on the optimized 3D model. The display control unit 14 controls the display of the optimized 3D model that has been subjected to the culling processing and the rendering processing with respect to the display 15. Specific processing contents of these functional blocks will be described later.

The child PC 20 has a configuration similar to that of the child PC 10. That is, the child PC 20 includes a controller 21, and the controller 21 realizes a culling processing unit 22, a rendering processing unit 23, and a display control unit 24. Other child PCs also have similar configurations. The child PC 10 corresponds to an embodiment of a first display processing apparatus according to the present technology. Further, the child PC 20 corresponds to an embodiment of a second display processing apparatus according to the present technology.

The display 15 is, for example, a display panel that uses liquid crystal, EL (ElectroLuminescence), or the like. The display 25 and the other displays also have similar configurations. The display 15 corresponds to an embodiment of a first display according to the present technology. Further, the display 25 corresponds to an embodiment of a second display according to the present technology. Furthermore, the displays 15 and 25 and the other displays form the tiling display according to the present technology.

In a case where audio is output together with the display of a video, a speaker may be arranged. Furthermore, since the 3D model 1 is displayed in the image display system 100, it is necessary to change a display position of an image according to a viewing position of a user. A camera and/or a depth sensor may be arranged for acquiring the viewing position of the user.

Hereinafter, specific processing contents of the parent PC 50 will be described. In the present embodiment, pre-processing (offline processing) is executed by the parent PC 50. That is, predetermined processing is executed in advance before the user uses the image display system 100 (before an image is displayed on each display).

Specifically, an optimized 3D model is generated by the parent PC 50. The optimized 3D model is a 3D model 1 optimized for each display, and different optimized 3D models are respectively generated for the displays. That is, the parent PC 50 executes processing of generating an optimized 3D model for the display 15, processing of generating an optimized 3D model for the display 25, and so on. The processing of generating an optimized 3D model for the display 15 will be described below, but a content of the processing of generating an optimized 3D model for other displays such as the display 25 is similar to that of the processing for the display 15.

[Calculation of visibility volume]

Contents of the processing performed by the VV calculation unit 57 (VV calculation method) will be described. With the 3D model 1, model arrangement information M, display position information D, animation data A, and viewing range information W being an input, the VV calculation unit 57 outputs VV. First, descriptions will be given on contents of these pieces of information and parameters.

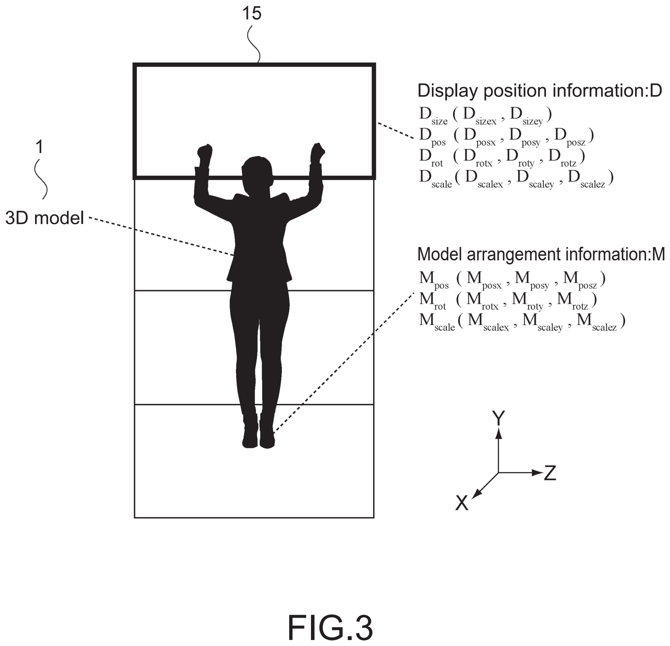

Fig. 3 is a schematic diagram showing the 3D model 1, the model arrangement information M, and the display position information D. The 3D model 1 is image data displayed by the image display system 100. The model arrangement information M is information related to the arrangement of the 3D model 1, and is constituted of three types of parameters of $M_{pos}$, $M_{rot}$, and $M_{scale}$.

$M_{pos}$ is a parameter expressing a position of the 3D model 1, and is constituted of three values of $M_{posx}$, $M_{posy}$, and $M_{posz}$. A three-dimensional coordinate system constituted of an x axis, a y axis, and a z axis is defined in advance in a world space (a space in which the image display system 100 exists), and the x coordinate of the 3D model 1 in this coordinate system is represented by $M_{posx}$. Similarly, the y coordinate is represented by $M_{posy}$, and the z coordinate is represented by $M_{posz}$. Here, in the present example, using a position of a tip end of a foot of the 3D model 1 as a reference, the coordinate of the tip end of the foot is set as $M_{pos}$. Without being limited to this, the position $M_{pos}$ of the 3D model 1 may be defined using an arbitrary position such as a center of a head or body as a reference.

$M_{rot}$ is a parameter expressing an extent to which the 3D model 1 is rotated, and is constituted of three values of $M_{rotx}$, $M_{roty}$, and $M_{rotz}$. The rotations of the 3D model 1 in an x direction, a y direction, and a z direction are represented by $M_{rotx}$, $M_{roty}$, and $M_{rotz}$, respectively. $M_{scale}$ is a parameter expressing a scale (scale size) of the 3D model 1, and is constituted of three values of $M_{scalex}$, $M_{scaley}$, and $M_{scalez}$. The scales of the 3D model 1 in the x direction, the y direction, and the z direction are represented by $M_{scalex}$, $M_{scaley}$, and $M_{scalez}$, respectively. $M_{scalex}$, $M_{scaley}$, and $M_{scalez}$ each take a value within a range of 0 or more and 1 or less, for example.

The display position information D is information related to a position of the display 15, and is constituted of four types of parameters of $D_{size}$, $D_{pos}$, $D_{rot}$, and $D_{scale}$. $D_{size}$ is a parameter expressing a size of the display 15, and is constituted of two values of $D_{sizex}$ and $D_{sizey}$. In the present example, the display 15 is rectangular, and the horizontal and vertical lengths of the display 15 are represented by $D_{sizex}$ and $D_{sizey}$, respectively. $D_{pos}$, $D_{rot}$, and $D_{scale}$ are parameters expressing contents similar to those of $M_{pos}$, $M_{rot}$, and $M_{scale}$, and these represent the coordinates, rotation, and scale of the display 15. It is noted that $D_{pos}$ may be defined using an arbitrary position of the display 15 such as a center, a side, or a corner portion as a reference.

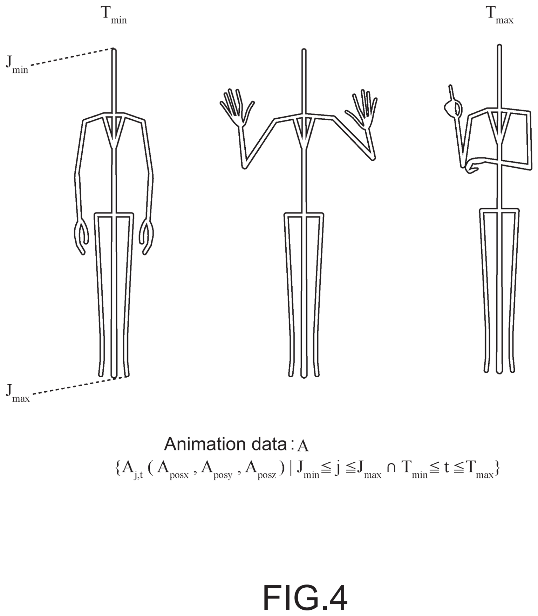

Fig. 4 is a schematic diagram showing the animation data A. Animation data $A_{j,t}$ is a parameter expressing time-series information of a three-dimensional position of a bone joint of the 3D model 1. In the present example, the joints that the 3D model 1 has are expressed as $J_{min} \leq j \leq J_{max}$. That is, the 3D model 1 has a total of $J_{max} - J_{min} + 1$ joints, where $j = J_{min}$, $J_{min} + 1$, ..., $J_{max} - 1$, $J_{max}$. Similarly, a clock time is expressed as $T_{min} \leq t \leq T_{max}$.

The animation data $A_{j,t}$ depends on the joint j and the clock time t, and is a parameter constituted of three values of $A_{posx}$, $A_{posy}$, and $A_{posz}$. An x coordinate, a y coordinate, and a z coordinate of the joint j at the clock time t are represented by $A_{posx}$, $A_{posy}$, and $A_{posz}$, respectively. For example, when the position of the joint $j = 2$ at the clock time $t = 3$ is (10, 20, 30), it can be described as $A_{2,3} = (10, 20, 30)$.

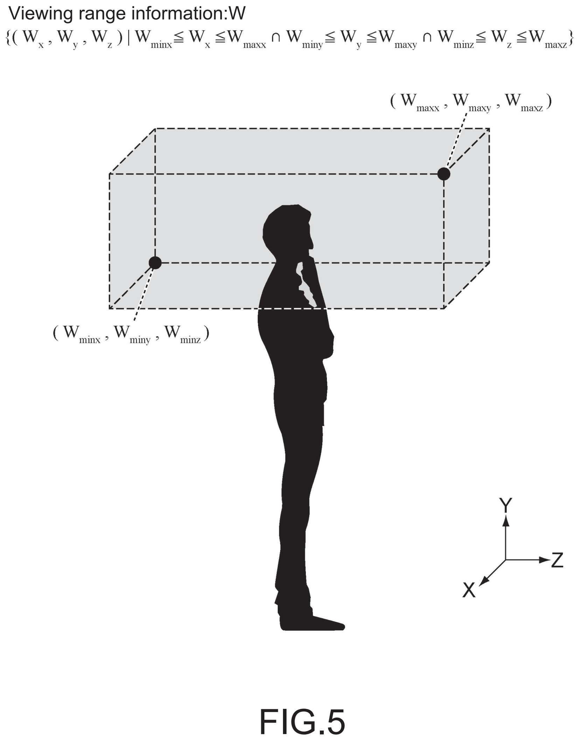

Fig. 5 is a schematic diagram showing the viewing range information W. The viewing range information W is a range of a position of a head of a user that can be tracked by the image display system 100. In the present embodiment, for example, the head of the user is photographed by a camera to acquire the position of the head, but a range of the position that can be acquired by the camera is limited due to an angle of view of the camera. Similarly, also when a depth sensor or the like is used, a range of the position that can be acquired is limited. Such a range of the position that can be acquired (trackable range) becomes the viewing range information W.

The viewing range information W is constituted of three values of $W_x$, $W_y$, and $W_z$. In the example shown in Fig. 5, the trackable range is a range in a rectangular parallelepiped shape, and this range in a rectangular parallelepiped shape becomes the viewing range information W. In this case, $W_x$, $W_y$, and $W_z$ move within the ranges of $W_{minx} \leq W_x \leq W_{maxx}$, $W_{miny} \leq W_y \leq W_{maxy}$, and $W_{minz} \leq W_z \leq W_{maxz}$, respectively. Of course, the viewing range information W is not limited to the range in a rectangular parallelepiped shape, and may take various shapes in accordance with the positional range trackable by the image display system 100.

Further, vertices are defined in the 3D model 1. For example, parts of the 3D model 1 such as a top of the head, elbows, knees, and tip ends of arms and legs are defined as the vertices. Of course, the specific positions of the vertices are not limited. An index v is allocated to each vertex within the range of $V_{min} \leq v \leq V_{max}$. Furthermore, vertex information is defined for each vertex. The vertex information is a parameter expressing a three-dimensional position of each vertex at the clock time t, and is expressed as $\{V_{v,t}(V_{posx}, V_{posy}, v_{posz})|V_{min} \leq v \leq V_{max} \cap T_{min} \leq t \leq T_{max}\}$.

VV is a parameter with a single value (scalar value) defined for each vertex, and is expressed as $\{VisibilityVolume_v|V_{min} \leq v \leq V_{max}\}$. It is noted that VV does not depend on the clock time t.

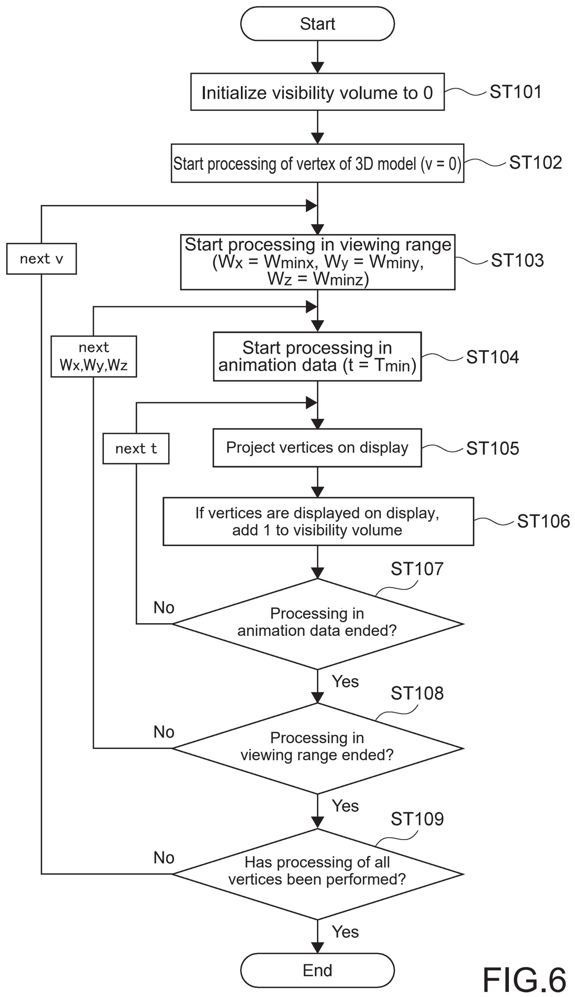

Fig. 6 is a flowchart showing a processing example of the calculation of the visibility volume. Before executing processing of Step 101, the VV calculation unit 57 first acquires the 3D model 1, the model arrangement information M, the display position information D, the animation data A, and the viewing range information W. These pieces of information are stored in advance in the storage unit 54, for example. Hereinafter, all of the processing of Steps 101 to 109 is executed by the VV calculation unit 57.

VV is initialized to 0 (Step 101). VVs at all vertices are initialized to 0 by the VV calculation unit 57. As shown in Fig. 6, the subsequent processing of Steps 103 to 108 is performed for each vertex while the vertex index v is incremented by 1. Similarly, the processing of Steps 104 to 107 is performed for each of the coordinates within the viewing range. Similarly, the processing of Steps 105 and 106 is performed for each clock time t. In other words, the processing of Steps 105 and 106 is executed with respect to all of the clock times, all of the coordinates within the viewing range, and all of the vertices.

The vertex index is set to v = 0 (Step 102). In the present example, $V_{min} = 0$, that is, v is first set to a minimum value. The coordinates are set to $(W_x, W_y, W_z) = (W_{minx}, W_{miny}, W_{minz})$ (Step 103). The clock time is set to $t = T_{min}$ (Step 104). First, the processing of Steps 105 and 106 is executed with respect to these vertex index, coordinates, and clock time.

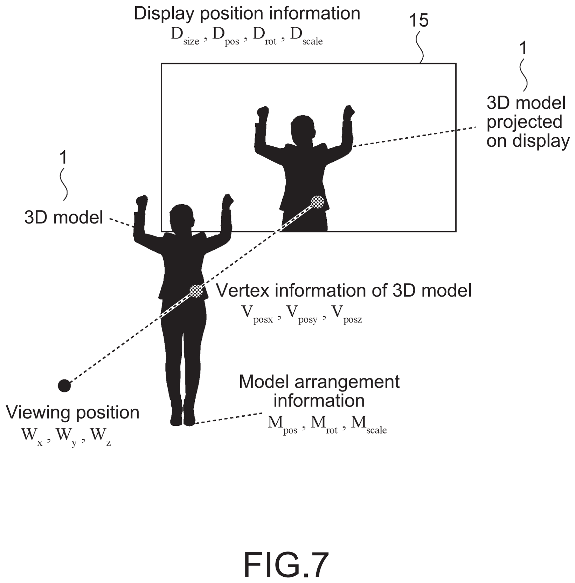

Fig. 7 is a schematic diagram showing processing of projecting vertices onto the display. In the processing of Step 105, the processing of projecting the vertices onto the display is executed. Specifically, based on the vertex information $V_{0, T_{min}}$ of the vertex of v = 0 and $t = T_{min}$, the viewing position $(W_{minx}, W_{miny}, W_{minz})$, and the display position information $D_{size}$, $D_{pos}$, $D_{rot}$, and $D_{scale}$, a projection position (two-dimensional coordinates) of the vertex v = 0 with respect to the display 15 in a case where the clock time is $t = T_{min}$ and the viewing position is $(W_{minx}, W_{miny}, W_{minz})$ is calculated.

In the processing of Step 106, it is determined whether or not the projection position is within the display 15. The determination is executed based on the display position information D and the calculated projection position. Fig. 7 schematically shows a state where the projection position is within the display 15. In this case, 1 is added to $VV_0$, which is VV at the vertex v = 0. On the other hand, when the projection position is not within the display 15, the value of $VV_0$ is not changed.

It is noted that Fig. 7 is merely a schematic diagram used for explanation, and the processing of projecting the 3D model 1 onto the display 15 and determining whether or not the vertices are projected using a camera or the like is not performed in actuality. The projection processing is realized only by numerical calculations by the parent PC 50 as internal processing.

It is determined whether or not the processing within the animation data A has ended (Step 107). When t has not reached $T_{max}$ (No in Step 107), t is incremented by 1, and the processing of Steps 105 and 106 is executed again. That is, the projection processing of the vertex $V_{0, T_{min}+1}$ is executed under the clock time $t = T_{min} + 1$ and the viewing position $(W_{minx}, W_{miny}, W_{minz})$. After that, the projection processing is repeatedly executed until t reaches $T_{max}$.

When t reaches $T_{max}$ (Yes in Step 107), it is determined whether or not the processing within the viewing range has ended (Step 108). When the processing at all viewing positions within the viewing range has not ended (No in Step 108), the processing of Steps 104 to 107 is executed at the next viewing position, for example, $(W_{minx}, W_{miny}, W_{minz}+1)$. In other words, the projection processing is executed at all viewing positions within the viewing range.

When the processing at all viewing positions has ended (Yes in Step 108), the projection processing will have been performed the number of times expressed by (number of viewing positions) x (number of times). Of those, the number obtained by adding 1 to $VV_0$ becomes the value of $VV_0$ at that time point.

Hereinafter, a processing example will be described using specific values. It is noted that the values used in the descriptions are mere examples, and the values used in the actual processing are not limited to such values.

(Example)

Range of clock time t: $1 \leq t \leq 10$
Range of viewing position: $11 \leq W_x \leq 20$, $21 \leq W_y \leq 40$, $11 \leq W_z \leq 50$

In this case, the number of times of processing related to the clock time t is 10, and the number of times of processing related to the viewing position is 8,000 (a product of $W_x$: 10 times, $W_y$: 20 times, and $W_z$: 40 times). That is, the total number of times of processing (the number of times of projection) is 80,000, which is a product of these. For example, of these, when the number of times the projection position has been within the display 15 is 20,000 times, the processing of adding 1 to $VV_0$ in Step 106 is performed 20,000 times, so the value of $VV_0$ at the time the processing ends becomes 20,000.

It is determined whether or not the processing of all vertices has been performed (Step 109). When v has not

reached $V_{max}$ (No in Step 109), 1 is added to v, and the processing of Steps 103 to 108 is executed again with respect to the next vertex. When v has reached $V_{max}$ (Yes in Step 109), the processing ends.

In this manner, the value of $VV_v$ at each vertex v is calculated. It is noted that although the processing is executed in an ascending order of the clock time t and/or the vertex v in the present example, the specific processing order is not limited. Similarly, the processing order for the viewing positions is also not limited, and the processing only needs to be executed without omission regarding all the possible values that these may take.

[Bone segmentation]

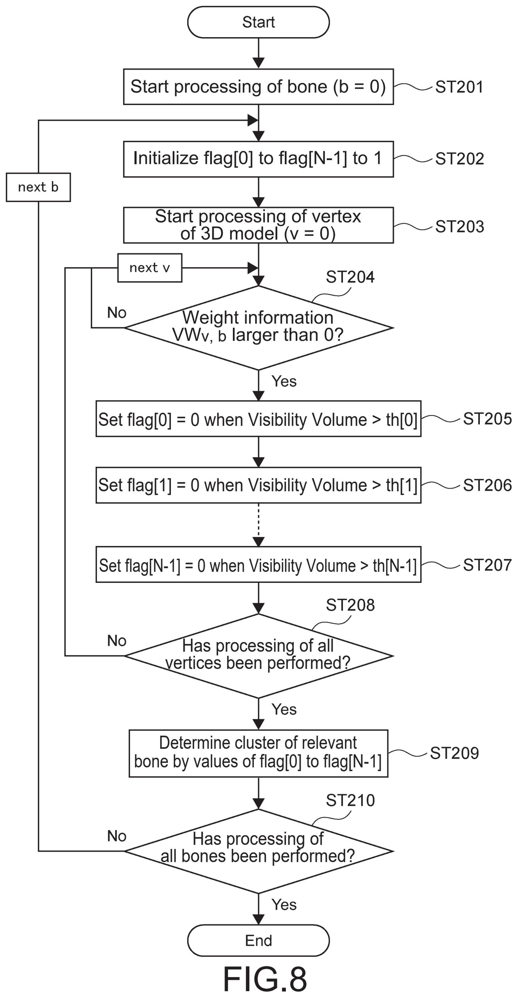

Fig. 8 is a flowchart showing a processing example of bone segmentation. Before executing processing of Step 201, the segmentation removal unit 58 first acquires the 3D model 1 and VV calculated by the VV calculation unit 57. Hereinafter, all of the processing of Steps 201 to 210 is executed by the segmentation removal unit 58.

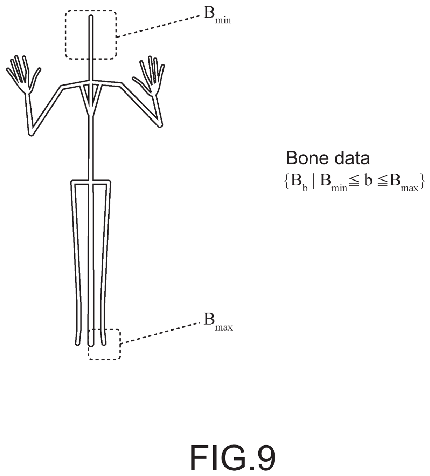

Fig. 9 is a schematic diagram showing bone information. Bones are defined for the 3D model 1. For example, parts of the 3D model 1 such as a bone of the head and bones of legs are defined as the bones. Of course, specific positions of the bones are not limited. An index b is allocated to each bone within the range of $B_{min} \leq b \leq B_{max}$. Furthermore, bone information is defined with respect to each bone. The bone information is a parameter expressing a name of each bone, and is expressed as $\{B_b | B_{min} \leq b \leq B_{max}\}$.

Furthermore, weight information $\{VW_{v, b} | V_{min} \leq v \leq V_{max}, B_{min} \leq b \leq B_{max}\}$ is defined with respect to each vertex v and each bone b. The weight information is a parameter expressing an extent to which a vertex follows when a bone is moved, and takes a value of 0 or more and 1 or less. The higher the value of the weight information is, the more the vertex is influenced by the movement of the bone, and if the value of the weight information is 0, the vertex is not influenced by the movement of the bone. For example, when the vertex is at the top of the head and the bone is a bone of the head, the vertex is relatively easily influenced by the movement of the bone, and thus the weight information takes a relatively high value.

Further, as internal variables for the processing, the number of segmentation levels N, an array th[n] of N VV threshold values, an array flag[n] of N binary values (0 or 1), and an array Claster[b] indicating a cluster number for each bone are defined. The number of segmentation levels N is the number of bone segmentations in the processing. The threshold value array th[n] is the threshold value used for the segmentation, and is a fixed value determined in advance at a stage prior to the processing. In the present embodiment, the value of th[0] is set to 0. Further, the value of th[n] is set such that n increases monotonically. That is, for example, th[2] > th[3] will not occur. When the number of segmentation levels is N, flag[n] is defined as an array of N parameters from flag[0] to flag[N-1], and th[n] is defined as an array of N parameters from th[0] to th[N-1]. The bones are grouped into any of clusters, and the cluster to which each bone belongs is represented by Claster[b].

The bone index is set to b = 0 (Step 201). In the present example, $B_{min} = 0$, that is, b is first set to a minimum value. The binary value array flag[0] to flag[N-1] is all initialized to 1 (Step 202). The vertex index is set to v = 0 (Step 203). That is, the subsequent processing is first executed under b = 0, v = 0.

It is determined whether or not the weight information is larger than 0 (Step 204). That is, the determination is executed for the weight information $VW_{0, 0}$ between the vertex v = 0 and the bone b = 0. In the case of $VW_{0, 0} > 0$ (Yes in Step 104), it is determined whether or not $VV_0$ at the vertex v = 0 is larger than the threshold value th[0] (Step 205). In the case of $VV_0 > th[0]$, 0 is substituted into flag[0]. After that, processing of substituting 0 into flag[1] in the case of $VV_0 > th[1]$, processing of substituting 0 into flag[2] in the case of VV > th[2], and so on are sequentially executed with respect to n = 0 to N-1 (Steps 205 to 207). Hereinafter, the processing of Steps 205 to 207 may be described as threshold value determination processing.

When it is determined in Step 204 that the weight information is 0, the threshold value determination processing is not performed, 1 is added to v, and the determination of Step 204 is executed again. That is, similar processing is performed with respect to the next vertex v = 1. After each threshold value determination processing, it is determined whether or not the processing has been performed for all vertices (Step 208), and the threshold value determination processing is repeatedly executed until v reaches $V_{max}$. That is, the threshold value determination processing is executed only with respect to the vertices whose weight information with respect to the bone b = 0 is not 0, and no processing is executed for the vertices whose weight information is 0.

The values of the binary value array flag[0] to flag[N-1] with respect to the bone b = 0 are determined at a time point when v reaches $V_{max}$ (Yes in Step 208). Hereinafter, a processing example will be described using specific values.

(Example)

Number of segmentation levels: N = 4
Threshold value: th[0] = 0, th[1] = 1.5, th[2] = 2.5, th[3] = 3.5

Bone: b = 0
Vertex: v = 0 to 3
VV: $VV_0 = 2$, $VV_1 = 3$, $VV_2 = 1$, $VV_3 = 4$
Weight information: $VW_{0,0} = 0.2$, $VW_{1,0} = 0.5$, $VW_{2,0} = 0.8$, $VW_{3,0} = 0.0$

Processing is first executed with respect to b = 0, v = 0. First, it is determined whether or not the weight information is larger than 0. In the present example, since $VW_{0,0} = 0.2$, the following threshold value determination processing is executed next.

Regarding $VV_0 = 2$,

· Since th[0] is larger than 0, 0 is substituted into flag[0] (1 → 0).
· Since th[1] is larger than 1.5, 0 is substituted into flag[1] (1 → 0).
· Since th[2] is not larger than 2.5, 0 is not substituted into flag[2] (remains at 1).
· Since th[3] is not larger than 3.5, 0 is not substituted into flag[3] (remains at 1).

Therefore, the values of flag[n] after the processing for v = 0 become
flag[0] = 0, flag[1] = 0, flag[2] = 1, and flag[3] = 1.

Next, for b = 0, v = 1, since $VW_{1,0} = 0.5$ in the present example, the threshold value determination processing is performed in a similar manner.

For $VV_1 = 3$,

Since th[0] is larger than 0, 0 is substituted into flag[0] (remains at 0).
· Since th[1] is larger than 1.5, 0 is substituted into flag[1] (remains at 0).
· Since th[2] is larger than 2.5, 0 is substituted into flag[2] (1 → 0).
· Since th[3] is not larger than 3.5, 0 is not substituted into flag[3] (remains at 1).

Therefore, the values of flag[n] after the processing for v = 1 become
flag[0] = 0, flag[1] = 0, flag[2] = 0, and flag[3] = 1.

Next, for b = 0, v = 2, since $VW_{2,0} = 0.8$ in the present example, the threshold value determination processing is performed in a similar manner.

For $VV_2 = 1$,

· Since th[0] is larger than 0, 0 is substituted into flag[0] (remains at 0).
· Since th[1] is not larger than 1.5, 0 is not substituted into flag[1] (remains at 0).
· Since th[2] is not larger than 2.5, 0 is not substituted into flag[2] (remains at 0).
· Since th[3] is not larger than 3.5, 0 is not substituted into flag[3] (remains at 1).

Therefore, the values of flag[n] after the processing for v = 2 become
flag[0] = 0, flag[1] = 0, flag[2] = 0, and flag[3] = 1 (no change from the values obtained after the processing for v = 1).

Next, for b = 0, v = 3, since $VW_{3,0} = 0.0$, the threshold value determination processing is not executed. It is noted that if $VW_{3,0}$ is not 0 and the threshold value determination processing is performed, $VV_3 = 4$ is larger than th[3] = 3.5, so 0 is substituted into flag[3], and the values of flag[n] after the processing become
flag[0] = 0, flag[1] = 0, flag[2] = 0, and flag[3] = 0.
In this manner, the threshold value determination processing is performed for all vertices (that follow) whose weight information is not 0 with respect to a certain bone. Then, if there is even one vertex whose $VV_v$ is larger than th[n], the value of flag[n] becomes 0. On the other hand, if there is no such vertex, the value of flag[n] becomes 0.
Further, since the value of th[n] is set to increase monotonically, when certain flag[n] is 1, flag[m] with a larger argument will never become 0. That is, for example, a case where
flag[0] = 0, flag[1] = 1, flag[2] = 0, and flag[3] = 0 will never occur.
The cluster of the bone is determined (Step 209). Specifically, when the value of flag[n] becomes 1 for the first time in flag[m], the cluster of that bone is determined as Claster[b] = m. For example, in the example described above, since

flag[0] = 0, flag[1] = 0, flag[2] = 0, and flag[3] = 1,

and the value of flag[n] becomes 1 for the first time in flag[3], the cluster of the bone b = 0 becomes Cluster[0] = 3. Further, for example, when $VV_v$ of all vertices following the bone is 0, flag[0] = 1, so Cluster[b] = 0.

It is determined whether or not processing of all bones has been performed (Step 210). If b has not reached $B_{max}$ (No in Step 210), the processing of Steps 202 to 210 is repeatedly executed with respect to each bone while adding 1 to b. When the processing has been executed with respect to all bones and b has reached $B_{max}$ (Yes in Step 210), the processing ends. In this manner, each bone b is grouped into one of the clusters of Claster[b] = 0 to N-1.

[Removal of vertex]

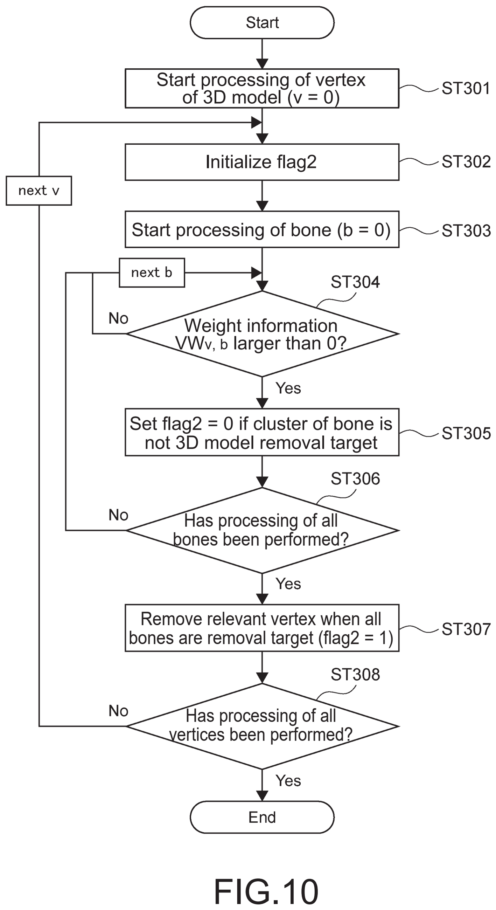

Fig. 10 is a flowchart showing a processing example of removal of vertices. All of the processing of Steps 301 to 308 is executed by the segmentation removal unit 58. Furthermore, a binary value parameter flag2 is defined as an internal variable for the processing.

The vertex index is set to v = 0 (Step 301). The parameter flag2 is initialized to 1 (Step 302). The bone index is set to b = 0 (Step 303). All of the subsequent processing of Steps 304 to 306 becomes processing under v = 0, b = 0.

It is determined whether or not the weight information is larger than 0 (Step 304). When $VW_{0,0} > 0$ (Yes in Step 304), it is determined whether or not the cluster of the bone b = 0 is a 3D model removal target (Step 305). Specifically, Claster[b] = 0 is the 3D model removal target cluster, and when Claster[b] = 0, it is determined that the bone b = 0 is a removal target. On the other hand, when Claster[b] is not 0, it is determined that the bone b = 0 is not the removal target. In this case, 0 is substituted into flag2.

On the other hand, when $VW_{0,0} = 0$ (No in Step 304), the determination on whether or not the bone b = 0 is the removal target is not executed, and the processing of Step 304 is similarly executed with respect to the next bone b = 1.

After each processing, it is determined whether or not the processing has been performed with respect to all bones (Step 306), and when b has not reached $B_{max}$ (No in Step 306), the processing is executed with respect to the next bone. That is, the processing is executed with respect to only the bones whose weight information with respect to the vertex v = 0 is not 0, and no processing is executed with respect to the bones whose weight information is 0.

The value of flag2 of the binary value with respect to the vertex v = 0 is determined to be either 0 or 1 at a time point when b reaches $B_{max}$ (Yes in Step 306). When all bones related to the vertex v = 0 are the removal target, that vertex is removed (Step 307). Specifically, when flag2 remains at 1, the vertex is removed. That is, when all bones whose weight information with respect to a certain vertex is not 0 are the removal target (Claster[b] = 0), that vertex is removed. On the other hand, when there is even one bone that is not the removal target out of the bones whose weight information is not 0, the vertex is not removed. Furthermore, whether or not the bone whose weight information is 0 is the removal target does not affect whether or not the vertex is to be removed.

It is determined whether or not the processing of all vertices has been performed (Step 308). When v has not reached $V_{max}$ (No in Step 308), the threshold value determination processing is executed with respect to unprocessed vertices. When the processing has been executed with respect to all vertices and v has reached $V_{max}$ (Yes in Step 308), the processing ends. In this manner, the processing of removing a vertex or the processing of not removing a vertex is completed with respect to each vertex.

Hereinafter, the processing example will be described using specific values.

(Example)

Bone: b = 0 to 2

Bone cluster: Claster[0] = 0, Claster[1] = 0, Claster[2] = 2

Vertex: v = 0 to 2

Weight information $VW_{v,b}$:

$$VW_{0,0} = 0.0, \quad VW_{0,1} = 0.0, \quad VW_{0,2} = 0.5$$

$$VW_{1,0} = 0.5, \quad VW_{1,1} = 0.8, \quad VW_{1,2} = 0.0$$

$$VW_{2,0} = 0.0, \quad VW_{2,1} = 0.5, \quad VW_{2,2} = 0.8$$

The processing is first executed with respect to v = 0.

· When b = 0, $VW_{0,0}$ = 0.0, so no removal determination is performed.

· When b = 1, $VW_{0,1}$ = 0.0, so no removal determination is performed.

· When b = 2, $VW_{0,2}$ = 0.5, so the removal determination is performed. The cluster for the bone b = 2 is Claster[2] = 2, so 0 is substituted into flag2 (1 → 0).

Therefore, flag2 = 0, and the vertex v = 0 is not removed.

Next, the processing is executed with respect to v = 1.

· When b = 0, $VW_{1,0}$ = 0.5, so the removal determination is performed. The cluster for the bone b = 0 is Claster[0] = 0, so 0 is not substituted into flag2 (remains at 1).

· When b = 1, $VW_{1,1}$ = 0.8, so the removal determination is performed. The cluster for the bone b = 1 is Claster[1] = 0, so 0 is not substituted into flag2 (remains at 1).

· When b = 2, $VW_{1,2}$ = 0.0, so no removal determination is performed.

Therefore, flag2 remains at 1, and the vertex v = 1 is removed.

Next, the processing is executed with respect to v = 2.

· When b = 0, $VW_{2,0}$ = 0.0, so no removal determination is performed.

· When b = 1, $VW_{2,1}$ = 0.5, so the removal determination is performed. The cluster for the bone b = 1 is Claster[1] = 0, so 0 is not substituted into flag2 (remains at 1).

· When b = 2, $VW_{2,2}$ = 0.8, so the removal determination is performed. The cluster for the bone b = 2 is Claster[2] = 2, so 0 is substituted into flag2 (1 → 0).

Therefore, flag2 = 0, and the vertex v = 2 is not removed.

In this manner, in the present example, only the vertex v = 1 is removed. It is noted that when there is no bone whose weight information is not 0 (that follows) with respect to a certain vertex, the removal determination is not performed even once, and thus flag2 remains at 1. Therefore, the vertex is removed.

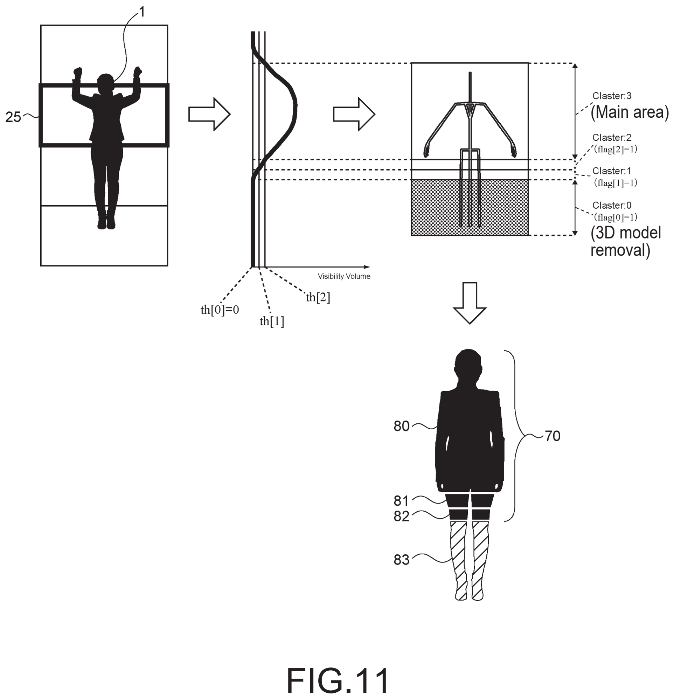

Fig. 11 is a schematic diagram showing the segmentation processing and the removal processing. As an example, Fig. 11 shows a conceptual diagram of the processing with respect to the second display 15 from the top. In the present example, the number of segmentations N is set to N = 3, and each bone included in the 3D model 1 is sorted into one of the clusters 0 to 3. As shown in Fig. 11, for example, each bone positioned in the upper body belongs to the cluster 3. The cluster with the largest argument like the cluster 3 becomes a main segmentation area (an area with the highest display frequency). Furthermore, an upper portion of the lower body belongs to the cluster 2, and a center portion belongs to the cluster 1. A lower portion of the lower body belongs to the cluster 0 (hatched portion, removal target).

The 3D model 1 is segmented into an upper body part 80 (corresponding to the cluster 3), a lower body upper-portion part 81 (corresponding to the cluster 2), a lower body center-portion part 82 (corresponding to the cluster 1), and a lower body lower-portion part 83 (corresponding to the cluster 0). Then, the lower body lower-portion part 83 is removed, and an optimized 3D model 70 is generated from the remaining three parts 80 to 82.

[Setting of boundary information]

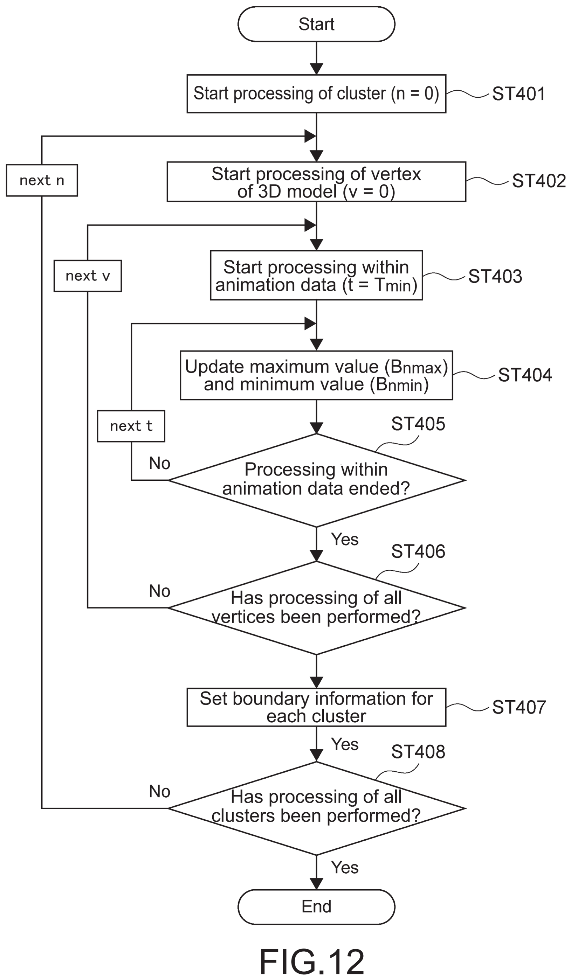

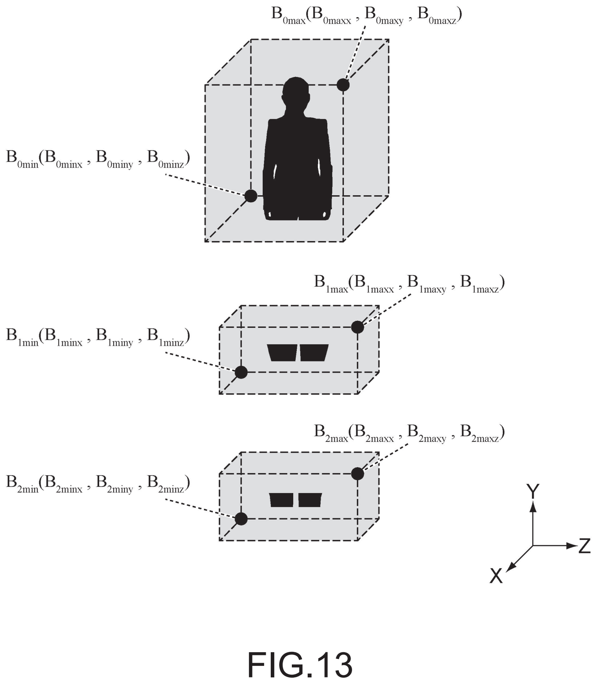

Fig. 12 is a flowchart showing a processing example of setting of boundary information. All of the processing of Steps 401 to 408 is executed by the boundary information setting unit 59. Fig. 13 is a schematic diagram showing the boundary information. The boundary information is information that depends on the cluster n and indicates three-dimensional coordinates. The boundary information is constituted of a minimum value and a maximum value, and the minimum value is represented by $B_{nmin}$ ($B_{nminx}$, $B_{nminy}$, $B_{nminz}$). Further, the maximum value is represented by $B_{nmax}$ ($B_{nmaxx}$, $B_{nmaxy}$, $B_{nmaxz}$).

First, the processing is executed with respect to the cluster 0, the vertex v = 0 (meaning the first vertex belonging to the cluster 0), and the clock time t = $T_{min}$ (Steps 401 to 403). In Step 404, the coordinates of the vertex v = 0 at the clock time t = $T_{min}$ are substituted as they are into the maximum value $B_{0max}$ and the minimum value $B_{0min}$.

Next, processing is executed with respect to the cluster 0, the vertex v = 0, and the clock time t = $T_{min}$+1. In Step 404, the current maximum value $B_{0max}$ and minimum value $B_{0min}$ are compared with the coordinates of the vertex v = 0 at the clock time t = $T_{min}$+1, and the maximum value and the minimum value are updated. Specifically, for example, when the x coordinate of a vertex exceeds the maximum value $B_{nmaxx}$ of the x coordinate, the maximum value is updated to the x coordinate of that vertex. The same holds true for the processing related to the y coordinate, the z coordinate, and the minimum value.

Similarly thereafter, the update processing of the maximum value and the minimum value is executed with respect to all the times t. The maximum value and the minimum value express the range in which the vertex v = 0 moves at all the clock times at a time point when all processing is completed (Yes in Step 405).

Similar processing is executed with respect to all of the other vertices. The maximum value and the minimum value express the range in which all vertices belonging to the cluster 0 move at all the clock times at a time point when all processing is completed (Yes in Step 406). In other words, information on which the maximum movable range by the animation is reflected is obtained. Fig. 13 schematically shows this range by a gray rectangular parallelepiped shape. The maximum value and the minimum value are set as the boundary information with respect to the cluster 0 (Step 407).

Similar processing is executed with respect to all of the other clusters, and the boundary information is set for each cluster. When the boundary information is set for all clusters (Step 408), the processing ends.

In this manner, the segmentation removal unit 58 generates the optimized 3D model 70, and the boundary information setting unit 59 generates the boundary information. In the optimized 3D model 70, a group of vertices of the lower body lower-portion part 83 that cannot be displayed on the display 15 is removed. Furthermore, the segmentation into the three parts 80 to 82 is performed based on the result of the projection processing with respect to the display 15. In this manner, the optimized 3D model 70 becomes a 3D model 1 optimized with respect to the display 15.

The optimized 3D model 70 and the boundary information are transmitted to the child PC 10 by the communication unit 53, for example. The received optimized 3D model 70 and boundary information are used in the culling processing and the rendering processing in the child PC 10. It is noted that the generated optimized 3D model 70 and boundary information may be stored in the storage unit 54.

In the present embodiment, a segmentation processing unit segments the 3D model 1 into a plurality of pieces of first unit model data that differ from each other, and generates first partial model data constituted of at least one of the plurality of pieces of first unit model data. Here, the VV calculation unit 57, the segmentation removal unit 58, and the boundary information setting unit 59 shown in Fig. 2 correspond to an embodiment of the segmentation processing unit according to the present technology. Further, the upper body part 80, the lower body upper-portion part 81, the lower body center-portion part 82, and the lower body lower-portion part 83 shown in Fig. 11 each correspond to the first unit model data according to the present technology. Furthermore, the optimized 3D model 70 corresponds to the first partial model data according to the present technology.

The 3D model 1 is segmented into four parts 80 to 83. These four parts are parts that differ from one another, that is, do not have overlapping portions. Further, the optimized 3D model 70 is constituted of three parts 80 to 82 excluding the lower body lower-portion part 83 out of the four parts 80 to 83. It is noted that the first partial model data may alternatively be constituted of a single piece of first unit model data.

Also in the present embodiment, in the generation of the first partial model data, the segmentation processing unit excludes, from the first partial model data, first non-display model data, which is the first unit model data that is not to be displayed on the display 25. Here, the lower body lower-portion part 83 corresponds to the first non-display model data according to the present technology. In other words, the lower body lower-portion part 83 that cannot be displayed on the display 25 is excluded from the optimized 3D model 70.

Also in the present embodiment, the segmentation processing unit sets a plurality of ranges of a first display frequency that differ from one another, calculates the first display frequency for each portion of the 3D model data, and generates the plurality of pieces of first unit model data for each range of the first display frequency. Here, the value range sectioned by the threshold value th[n] used in the processing of Steps 201 to 210 corresponds to the range of the first display frequency. In other words, the ranges of th[0] (= 0), th[0] to th[1], th[1] to th[2], ..., th[N-2] to th[N-1], th[N-1], and so on each correspond to the range of the first display frequency. These ranges are ranges that differ from one another.

Further, each bone corresponds to a portion of the 3D model data according to the present technology. The maximum value of VV of all vertices that follow a certain bone (whose weight information is not 0) corresponds to the first display frequency of the bone. When the first display frequency is high, the display frequency of the respective vertices also becomes relatively high, and the display frequency of the bone that follows all of them also becomes relatively high. Therefore, the first display frequency can be said to be a parameter expressing a display frequency of a bone. In the processing of Steps 201 to 210, the first display frequency of the bone (the maximum value of VV of all vertices that follow) is calculated. Furthermore, the bones are sorted into clusters according to the first display frequencies, and the parts 80 to 83 are generated for each cluster. That is, a plurality of pieces of first unit model data are generated for each range of the first display frequency.

Also in the present embodiment, the segmentation processing unit calculates the first display frequency, which is the display frequency of the 3D model 1 by the display 15, based on the position of the display 15 and a field of view of the user of the display 15, and executes the segmentation into the plurality of pieces of first unit model data based on the calculated first display frequency.

The display frequency of each bone can also be said to be the display frequency of the 3D model 1 itself, and therefore the display frequency of the 3D model 1 is calculated. Furthermore, the processing of generating a plurality of pieces of first unit model data for each range of the first display frequency is included in the processing of executing segmentation into a plurality of pieces of first unit model data based on the first display frequency. Furthermore, the display position information D corresponds to the position of the display 15, and the viewing range information W corresponds to the field of view of the user. Since VV is calculated using these pieces of information, the first display frequency is calculated based on the position of the display 15 and the field of view of the user of the display 15.

A specific method of calculating the first display frequency based on the position of the display 15 and the field of view of the user is not limited. That is, the first display frequency may be calculated using an algorithm or method different from that used in Steps 101 to 109 and/or Steps 201 to 210. Furthermore, the method for the segmentation into the plurality of pieces of first unit model data, that is based on the first display frequency, is also not limited, and a method other than the method of defining the range of the first display frequency by a threshold value may be used.

Also in the present embodiment, the segmentation processing unit executes the segmentation into the plurality of pieces of first unit model data based on the position of the display 15 and the field of view of the user of the display 15. In actuality, the processing of calculating VV using the display position information D and the viewing range information W, calculating the first display frequency based on VV, and generating the plurality of pieces of first unit model data for each range of the first display frequency is included in the processing of performing the segmentation into the plurality of pieces of first unit model data based on the position of the display 15 and the field of view of the user. Of course, the specific method for such processing is not limited, and the segmentation may be executed by a method that does not use the first display frequency.

Also in the present embodiment, the segmentation processing unit excludes, from the optimized 3D model 70, the first non-display model data, which is a portion of the 3D model 1 that is not to be displayed on the display 25. Here, the lower body lower-portion part 83 corresponds to the first non-display model data. It is noted that the removal of such a non-display portion may be performed by a method that does not include the segmentation into the unit model data.

[Display control]

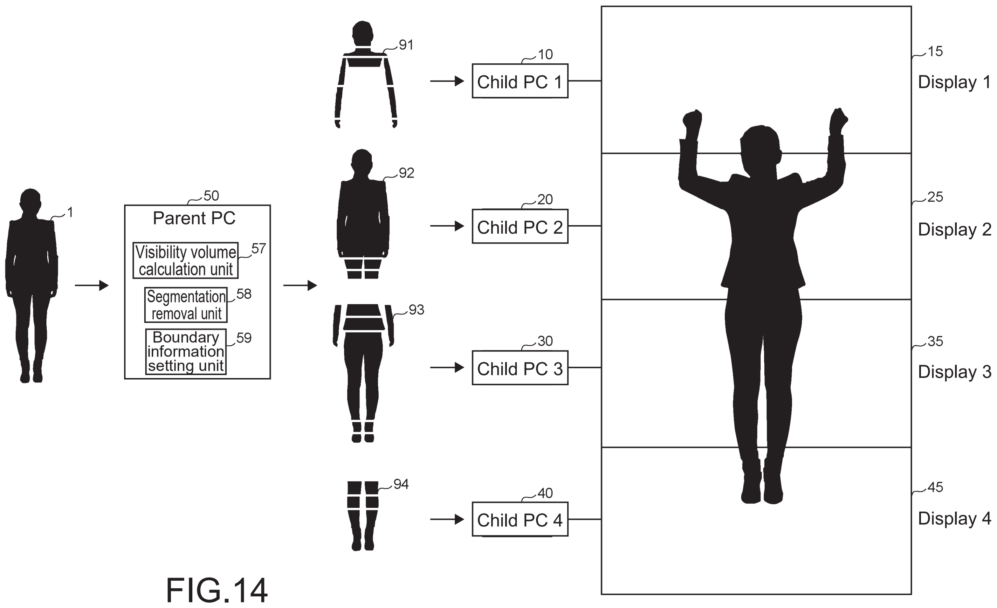

Fig. 14 is a schematic diagram showing the optimized 3D model. The optimized 3D model and boundary information to be used in the display 15 are generated by the processing described up to here, and are transmitted to the child PC 10 corresponding to the display 15. In addition, similar processing is performed for the number of displays, and the optimized 3D model and boundary information to be used in the displays 25, 35, and 45 are also transmitted to the corresponding child PCs 20, 30, and 40.

Fig. 14 schematically shows an example of optimized 3D models 91 to 94 that are respectively transmitted to the child PCs 10 to 40. In this manner, the parts that constitute the optimized 3D models 91 to 94 differ, and the ways of segmentation also differ.

In the present embodiment, the segmentation processing unit (the VV calculation unit 57, the segmentation removal unit 58, and the boundary information setting unit 59) segments, based on a positional relationship between a first display and a second display of a tiling display and a field of view of a user of the tiling display, 3D model data 1 displayed on the tiling display into first partial model data and second partial model data respectively corresponding to the first display and the second display.

Here, for example, the display 15 corresponds to the first display, and the display 25 corresponds to the second display. Further, the optimized 3D model 91 corresponds to the first partial model data, and the optimized 3D model 92 corresponds to the second partial model data.

Furthermore, display position information D of the displays 15 and 25 corresponds to the positional relationship between the first display and the second display of the tiling display, and the viewing range information W corresponds to the field of view of the user of the tiling display. In the present embodiment, the processing of calculating VV, and the like is performed based on the display position information D of the displays 15 and 25 and the viewing range information W, to thus segment the 3D model 1 into the optimized 3D models 91 and 92. It is noted that the segmentation processing into the optimized 3D models 91 and 92 may alternatively be executed in a form that does not include the calculation of VV or the segmentation into unit model data.

Also in the present embodiment, the communication unit 53 transmits the optimized 3D models 91 and 92 to the child PCs 10 and 20, respectively.

Also in the present embodiment, the first partial model data and the second partial model data include the same overlapping model data which is a part of the 3D model data. Here, for example, the head of the 3D model 1 is included in common in both the optimized 3D models 91 and 92, and therefore corresponds to the overlapping model data according to the present technology. Furthermore, tip end portions of the feet are included in common in both the optimized 3D models 93 and 94, and therefore also correspond to the overlapping model data. It is noted that since the ways the optimized 3D models 91 to 94 are segmented differ, the overlapping model data may be a part of the unit model data (each part). For example, the optimized 3D model 92 includes one part of the upper body, but only the head becomes the overlapping model data with respect to the optimized 3D model 91.

It is noted that in the present example, the descriptions have been given assuming that the display 15 corresponds to the first display and the display 25 corresponds to the second display, but the present technology is not limited to this, and any two different displays such as the displays 35 and 45, for example, correspond to the first and second displays. The same holds true for the first and second partial model data, the first and second display processing apparatuses, the first and second non-display model data, the first and second unit model data, and the first and second display frequencies.

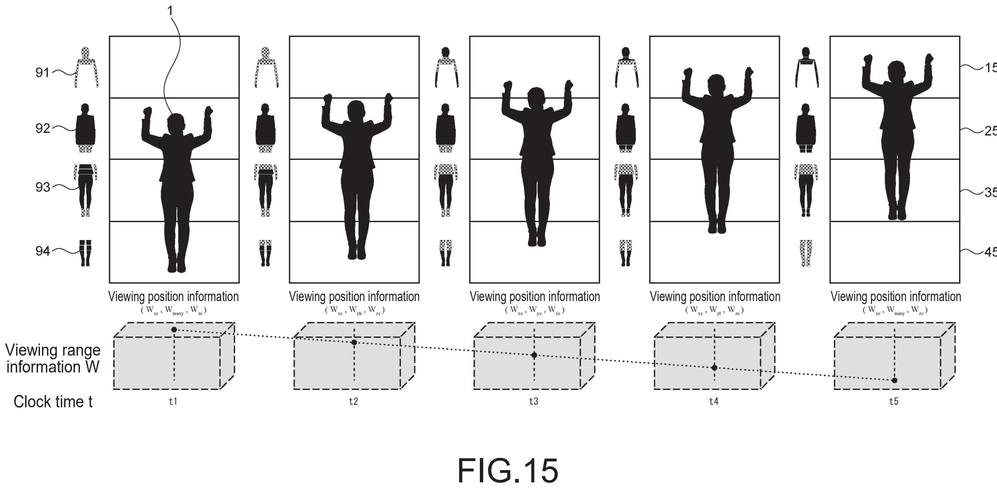

Fig. 15 is a schematic diagram showing the culling processing, the rendering processing, and the display control processing. Hereinafter, these processing will be described. It is noted that the methods for the processing to be described below are mere examples, and each processing may be executed by any known method.

First, the optimized 3D models 91 to 94, the boundary information, the model arrangement information M, the display position information D, the animation data A, and the viewing position information are acquired by each of the child PCs 10 to 40. For example, communication is executed between the communication unit of each of the child PCs 10 to 40 and the communication unit 53 of the parent PC 50, to acquire each piece of information.

Fig. 15 shows a display example of a case where the user moves although an apparent image seen by the user does not change. In this case, in order to prevent the apparent image from changing, it is necessary to change the display in accordance with the movement of the user. In the present example, a viewing position of the user moves downwardly in the Y direction from the clock time $t_1$ to the clock time $t_5$, and the position of the 3D model 1 displayed on the display moves upwardly accordingly. The display position of the 3D model 1 is calculated based on the model arrangement information M, the display position information D, the animation data A, and the viewing position information.

At the clock time $t_1$ at the far left, the 3D model 1 is not displayed on the display 15 at the top. The optimized 3D model 91 is constituted of five parts including the head, shoulders, upper arms and chest, lower arms, and hands, and all of these parts are culled by the culling processing unit 12. In Fig. 15, the culled parts are illustrated in polka dots.

The head, upper body, arms, and the like of the 3D model 1 are displayed on the second display 25 from the top. The optimized 3D model 92 is constituted of the upper body, upper thighs, and lower thighs, but of those, parts corresponding to the upper thighs and lower thighs are culled by the culling processing unit 22. In this manner, culling is executed with respect to the parts that are not to be displayed at all on the display 25. Meanwhile, for the parts that are to be displayed even in part, the rendering processing is executed without executing the culling. In other words, the rendering processing unit 23 renders the upper body part. In Fig. 15, the rendered parts are illustrated in black. The culling and rendering are performed based on the boundary information.

The culling and rendering are similarly executed for the optimized 3D models 93 and 94. Furthermore, the respective display control units control the display of the optimized 3D models 91 to 94 that have been subjected to the culling and rendering, with respect to the displays 15 to 45. For example, with respect to the display 15, display is controlled by the display control unit 14 so as not to display the optimized 3D model 91. Furthermore, with respect to the display 25, display of the upper body part of the optimized 3D model 92 is controlled by the display control unit 24. Similar display control is executed with respect to the displays 35 and 45.

As a result, the four displays 15 to 45 cooperate to display one 3D model 1. It is noted that in performing the display control, a technique such as pixel shader (a type of function that performs processing of a light source and/or shades, a method of processing an image in pixel units) or raster (a method of expressing an image as an aggregation of pixels arranged in a grid pattern) may be used.

After that, since the display by each of the displays 15 to 45 changes with time, the parts to be culled, the parts to be rendered, and the contents of the display control also change in each of the child PCs 10 to 40. For example, at the clock time $t_2$, the part of the hands is rendered on the display 15 at the top. In addition, at the clock time $t_3$, the three parts of the head, lower arms, and hands are rendered.

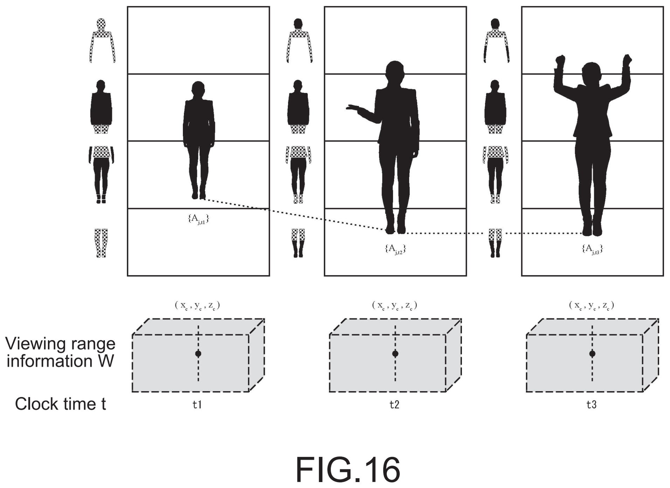

Fig. 16 is a schematic diagram showing the culling processing, the rendering processing, and the display control processing. In the present example, the user does not move, but an animation of a 3D model approaching from a distance is displayed. Also in this case, the display is realized by processing similar to that of Fig. 15.

As described above, in the image display system 100 according to the present embodiment, the 3D model 1 is segmented into the optimized 3D models 91 to 94 based on the positional relationship of the displays 15 to 45 and the field of view of the user of the tiling display, and the optimized 3D models 91 to 94 are transmitted to the child PCs 10 to 40, respectively. This reduces a processing load of rendering.

Since the volume of video data to be 3D-rendered becomes extremely large in the tiling display, a configuration in which a dedicated PC is provided in each display so as to distribute the rendering processing to each of the displays is adopted in many cases. However, an increase of a processing load on a specific PC when displaying a high-resolution 3D model may lead to a result that the frame rate of the entire system is also suppressed low.

There is known a method of culling an area not displayed on a display, as the method of reducing a load during rendering. The culling processing is processing of determining which area is not displayed and reducing the data to be rendered. Thus, efficiency of the rendering at the final stage can be raised.

The rendering processing generally involves performing the culling processing in object units. In the culling processing, the amount of data to be rendered is reduced by using boundary information preset to an object, and this processing is performed by using resources of Compute Shader of a CPU or a GPU. While this makes the rendering in object units more efficient, a partial area within the object is not culled, so the rendering load of the non-display area in the object becomes redundant.

In contrast, an improvement method has been proposed in which an object is segmented into more segmentalized area units at a preprocessing stage, and culling is performed for each of the small areas. In this method, the culling processing involves reducing the amount of data to be rendered in small area units using Task Shader of the GPU. While this method makes the rendering more efficient by performing culling for each of the small areas, there is a problem that an artifact occurs with respect to a dynamic object.

As a method of improving an artifact with respect to a dynamic object, there is proposed a method of updating a boundary setting for the culling processing in time series. While this method follows the method described above as the basic culling processing (culling for each of the small areas), the boundary information is calculated for every boundary between animation key-frames, to thus suppress an occurrence of an artifact in a case where the small areas are deformed by the animation.

Meanwhile, in any of these methods, the input data acquired by each of the displays for the rendering processing includes, in addition to the data to be displayed on that display, data that is not to be displayed on that display, that is, data that is to be displayed on another display.

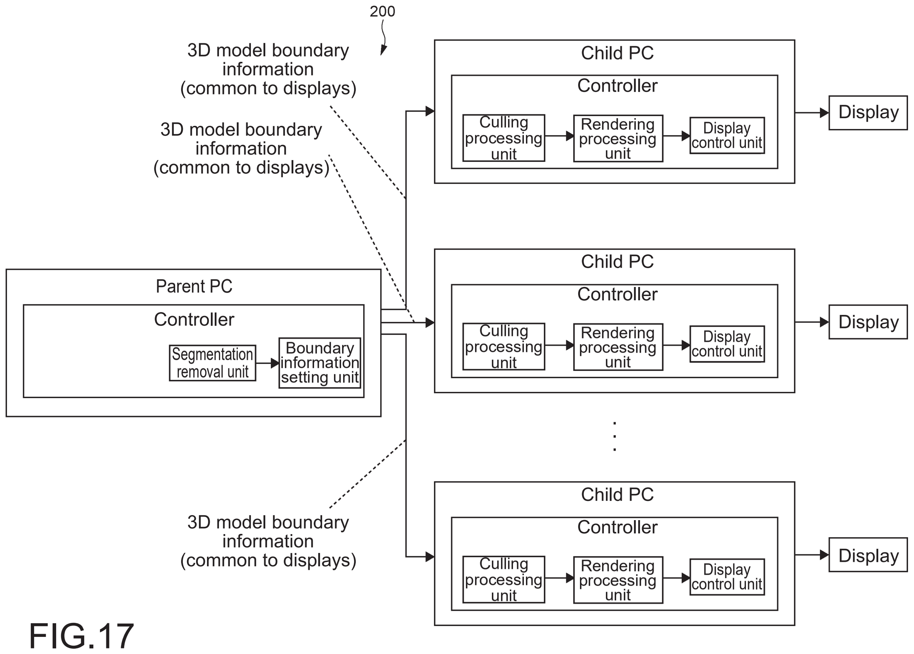

Fig. 17 is a schematic diagram showing an image display system 200 according to a comparative example. In the image display system 200 according to the comparative example, the same 3D model and the same boundary information are transmitted to the child PCs. In other words, the optimized 3D models 91 to 94 optimized for each display are not transmitted as in the image display system 100 according to the present technology, and the VV calculation unit 57 for generating the optimized 3D models 91 to 94 is not configured.

In such an image display system 200, data that is not to be displayed on the display (unnecessary portion) is also transmitted to each of the child PCs. Therefore, the processing load before data reduction, including the processing of the culling itself, is resultantly increased, and if the load on the PC reaches a processing performance cap, the PC may become a bottleneck in realizing the frame rate as the entire tiling display.

In contrast, it is possible to ensure the frame rate by lowering the resolution of content to be displayed, but this is not a desirable solution from the viewpoint of providing immersive content, and further improvements in the processing are required.

In the image display system 100 according to the present technology, the optimized 3D models 91 to 94 from which portions that cannot be displayed on the displays 15 to 45 have been removed are generated and transmitted to the child PCs 10 to 40. As a result, the culling processing and the rendering processing of unnecessary portions are not performed in the child PCs 10 to 40, and the processing load is reduced.

Furthermore, regarding data that may be displayed in a boundary area between adjacent displays (overlapping model data), the data is retained duplicately in the adjacent displays. Thus, it becomes possible to efficiently execute rendering even when the display position of the 3D model 1 transitions across the boundary between the displays, thus stabilizing a reproduction frame rate of the entire system.

Furthermore, information obtained by smoothing spatiotemporal information based on time-series data of the animation of the 3D model 1 and information on the viewing range of the user is used as an index for the segmentation and reduction of the 3D model 1. Specifically, the segmentation and reduction of the 3D model 1 are executed by the calculation of VV, the determination of bone clusters, the removal of vertices, the setting of boundary information, and the like. Thus, the segmentation and reduction of the 3D model 1 are performed in a form optimized for each display while taking into account the movement of the 3D model 1 and the viewing environment.

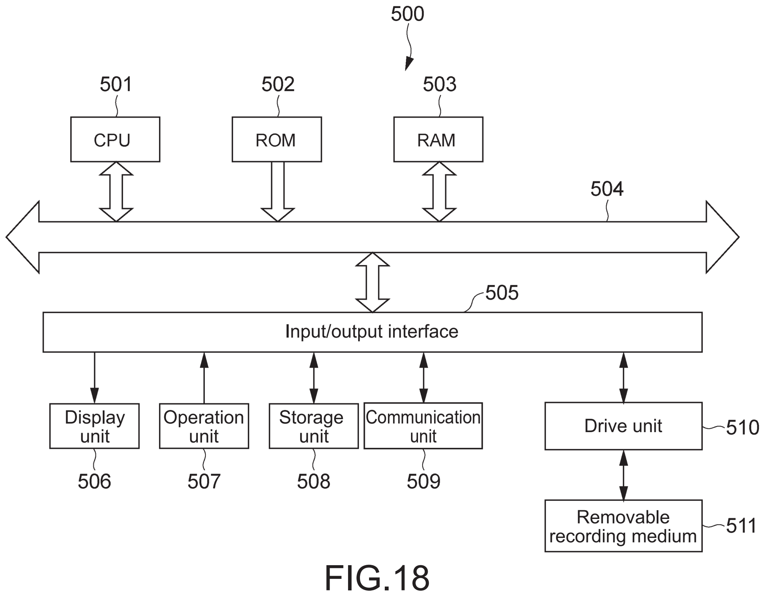

Fig. 18 is a block diagram showing a hardware configuration example of a computer 500 that can realize the parent PC 50 and the child PCs 10 to 40. The computer 500 includes a CPU 501, a ROM 502, a RAM 503, an input/output interface 505, and a bus 504 that mutually connects these. A display unit 506, an input unit 507, a storage unit 508, a communication unit 509, a drive unit 510, and the like are connected to the input/output interface 505.

The display unit 506 is a display device that uses, for example, liquid crystal, EL, or the like. The input unit 507 is, for example, a keyboard, a pointing device, a touch panel, or other operation devices. When the input unit 507 includes a touch panel, the touch panel may be integrated with the display unit 506. The storage unit 508 is a non-volatile storage device such as an HDD, a flash memory, or other solid-state memories, for example. The drive unit 510 is a device capable of driving, for example, a removable recording medium 511 such as an optical recording medium or a magnetic recording tape. The communication unit 509 is a modem, a router, or other communication equipment that can be connected to a LAN, a WAN, and/or the like and is used for communicating with other devices. The communication unit 509 may use either wired or wireless communication. The communication unit 509 is often used separately from the computer 500.

Image processing by the computer 500 having the hardware configuration as described above is realized by software stored in the storage unit 508, the ROM 502, or the like cooperating with hardware resources of the computer 500. Specifically, a program configuring the software, that is stored in the ROM 502 or the like, is loaded into the RAM 503 and executed, so as to realize an image processing method according to the present technology.

The program is installed into the computer 500 via, for example, the removable recording medium 511. Alternatively, the program may be installed into the computer 500 via a global network or the like. Alternatively, an arbitrary non-transitory storage medium that can be read by the computer 500 may be used.

The image processing method according to the present technology may be executed and the image processing apparatus and image display system according to the present technology may be constructed by a plurality of computers communicably connected via a network or the like cooperating with each other. That is, the image processing method according to the present technology can be executed in not only a computer system constituted of a single computer, but also a computer system in which a plurality of computers operate in conjunction with each other.

It is noted that in the present disclosure, the system refers to an aggregation of a plurality of constituent elements (apparatuses, modules (components), and the like), and whether or not all of the constituent elements are within the same housing is irrelevant. Accordingly, a plurality of apparatuses that are housed in separate housings and are connected via a network and a single apparatus in which a plurality of modules are housed in a single housing are both systems.

The image display system, the parent PC, the child PCs, the displays, the processing flows, and the like that have been described with reference to the drawings are mere embodiments, and can be arbitrarily modified without departing from the gist of the present technology. In other words, any other configurations, algorithms, and the like for implementing the present technology may be adopted.

Of the feature portions according to the present technology described above, at least two of the feature portions can be combined. In other words, the various feature portions described in the respective embodiments may be arbitrarily combined without distinction of the embodiments. Moreover, the various effects described above are mere examples and are not limited, and other effects may also be exerted.

It is noted that the present technology can also take the following configurations.

(1) An image processing apparatus, including:

a segmentation processing unit which segments, on the basis of a positional relationship between a first display and a second display of a tiling display and a field of view of a user of the tiling display, 3D model data to be displayed on the tiling display into first partial model data and second partial model data respectively corresponding to the first display and the second display; and
a transmission unit which transmits the first partial model data and the second partial model data respectively to a first display processing apparatus and a second display processing apparatus which are configured to respectively control the first display and the second display.

(2) The image processing apparatus according to (1), in which

in the segmentation, the segmentation processing unit
excludes first non-display model data, which is a portion of the 3D model data that is not to be displayed on the first display, from the first partial model data, and
excludes second non-display model data, which is a portion of the 3D model data that is not to be displayed on the second display, from the second partial model data.

(3) The image processing apparatus according to (1) or (2), in which
the first partial model data and the second partial model data include same overlapping model data that is a part of the 3D model data.

(4) The image processing apparatus according to any one of (1) to (3), in which

the segmentation processing unit
segments the 3D model data into a plurality of pieces of first unit model data that differ from each other, and generates the first partial model data constituted of at least one of the plurality of pieces of first unit model data, and segments the 3D model data into a plurality of pieces of second unit model data that differ from each other, and generates the second partial model data constituted of at least one of the plurality of pieces of second unit model data.

(5) The image processing apparatus according to (4), in which

the segmentation processing unit
excludes, in the generation of the first partial model data, first non-display model data, which is the first unit model data that is not to be displayed on the first display, from the first partial model data, and
excludes, in the generation of the second partial model data, second non-display model data, which is the second unit model data that is not to be displayed on the second display, from the second partial model data.

(6) The image processing apparatus according to (4) or (5), in which

> the segmentation processing unit
> executes the segmentation into the plurality of pieces of first unit model data on the basis of a position of the first display and a field of view of a user of the first display, and
> executes the segmentation into the plurality of pieces of second unit model data on the basis of a position of the second display and a field of view of a user of the second display.

(7) The image processing apparatus according to (6), in which

> the segmentation processing unit
> calculates a first display frequency which is a display frequency of the 3D model data by the first display on the basis of the position of the first display and the field of view of the user of the first display, and executes the segmentation into the plurality of pieces of first unit model data on the basis of the calculated first display frequency, and
> calculates a second display frequency which is a display frequency of the 3D model data by the second display on the basis of the position of the second display and the field of view of the user of the second display, and executes the segmentation into the plurality of pieces of second unit model data on the basis of the calculated second display frequency.

(8) The image processing apparatus according to (7), in which

> the segmentation processing unit
> sets a plurality of ranges of the first display frequency that differ from each other,
> calculates the first display frequency for each portion of the 3D model data,
> generates the plurality of pieces of first unit model data for each of the ranges of the first display frequency,
> sets a plurality of ranges of the second display frequency that differ from each other,
> calculates the second display frequency for each portion of the 3D model data, and
> generates the plurality of pieces of second unit model data for each of the ranges of the second display frequency.

(9) An image processing method, including:

> segmenting, on the basis of a positional relationship between a first display and a second display of a tiling display and a field of view of a user of the tiling display, 3D model data to be displayed on the tiling display into first partial model data and second partial model data respectively corresponding to the first display and the second display; and
> transmitting the first partial model data and the second partial model data respectively to a first display processing apparatus and a second display processing apparatus which are configured to respectively control the first display and the second display.

(10) An image display system, including:

> a first display and a second display of a tiling display;
> a first display processing apparatus and a second display processing apparatus which are configured to respectively control the first display and the second display; and
> an image processing apparatus including
>
>> a segmentation processing unit which segments, on the basis of a positional relationship between the first display and the second display and a field of view of a user of the tiling display, 3D model data to be displayed on the tiling display into first partial model data and second partial model data respectively corresponding to the first display and the second display, and
>> a transmission unit which transmits the first partial model data and the second partial model data respectively to the first display processing apparatus and the second display processing apparatus, in which
>
> the first display processing apparatus and the second display processing apparatus execute culling processing and rendering processing on the first partial model data and the second partial model data that have been received, and control display of the first partial model data and the second partial model data that have been subjected to the culling processing and the rendering processing, with respect to the first display and the second display.

Reference Signs List

1 3D Model
10, 20, 30, 40 child PC
12, 22 culling processing unit
13, 23 rendering processing unit
14, 24 display control unit
15, 25, 35, 45 display
50 parent PC
57 visibility volume calculation unit
58 segmentation removal unit
59 boundary information setting unit
80 upper body part
81 lower body upper-portion part
82 lower body center-portion part
83 lower body lower-portion part
91 to 94 optimized 3d model
100 image display system

**Claims**

1.  An image processing apparatus, comprising:

    a segmentation processing unit which segments, on a basis of a positional relationship between a first display and a second display of a tiling display and a field of view of a user of the tiling display, 3D model data to be displayed on the tiling display into first partial model data and second partial model data respectively corresponding to the first display and the second display; and
    a transmission unit which transmits the first partial model data and the second partial model data respectively to a first display processing apparatus and a second display processing apparatus which are configured to respectively control the first display and the second display.

2.  The image processing apparatus according to claim 1, wherein

    in the segmentation, the segmentation processing unit
    excludes first non-display model data, which is a portion of the 3D model data that is not to be displayed on the first display, from the first partial model data, and
    excludes second non-display model data, which is a portion of the 3D model data that is not to be displayed on the second display, from the second partial model data.

3.  The image processing apparatus according to claim 1, wherein
    the first partial model data and the second partial model data include same overlapping model data that is a part of the 3D model data.

4.  The image processing apparatus according to claim 1, wherein

    the segmentation processing unit
    segments the 3D model data into a plurality of pieces of first unit model data that differ from each other, and generates the first partial model data constituted of at least one of the plurality of pieces of first unit model data, and
    segments the 3D model data into a plurality of pieces of second unit model data that differ from each other, and generates the second partial model data constituted of at least one of the plurality of pieces of second unit model data.

5.  The image processing apparatus according to claim 4, wherein

the segmentation processing unit

excludes, in the generation of the first partial model data, first non-display model data, which is the first unit model data that is not to be displayed on the first display, from the first partial model data, and

excludes, in the generation of the second partial model data, second non-display model data, which is the second unit model data that is not to be displayed on the second display, from the second partial model data.

6. The image processing apparatus according to claim 4, wherein

the segmentation processing unit

executes the segmentation into the plurality of pieces of first unit model data on the basis of a position of the first display and a field of view of a user of the first display, and

executes the segmentation into the plurality of pieces of second unit model data on the basis of a position of the second display and a field of view of a user of the second display.

7. The image processing apparatus according to claim 6, wherein

the segmentation processing unit

calculates a first display frequency which is a display frequency of the 3D model data by the first display on the basis of the position of the first display and the field of view of the user of the first display, and executes the segmentation into the plurality of pieces of first unit model data on the basis of the calculated first display frequency, and

calculates a second display frequency which is a display frequency of the 3D model data by the second display on the basis of the position of the second display and the field of view of the user of the second display, and executes the segmentation into the plurality of pieces of second unit model data on the basis of the calculated second display frequency.

8. The image processing apparatus according to claim 7, wherein

the segmentation processing unit

sets a plurality of ranges of the first display frequency that differ from each other,

calculates the first display frequency for each portion of the 3D model data,

generates the plurality of pieces of first unit model data for each of the ranges of the first display frequency,

sets a plurality of ranges of the second display frequency that differ from each other,

calculates the second display frequency for each portion of the 3D model data, and

generates the plurality of pieces of second unit model data for each of the ranges of the second display frequency.

9. An image processing method, comprising:

segmenting, on a basis of a positional relationship between a first display and a second display of a tiling display and a field of view of a user of the tiling display, 3D model data to be displayed on the tiling display into first partial model data and second partial model data respectively corresponding to the first display and the second display; and

transmitting the first partial model data and the second partial model data respectively to a first display processing apparatus and a second display processing apparatus which are configured to respectively control the first display and the second display.

10. An image display system, comprising:

a first display and a second display of a tiling display;

a first display processing apparatus and a second display processing apparatus which are configured to respectively control the first display and the second display; and

an image processing apparatus including

a segmentation processing unit which segments, on a basis of a positional relationship between the first display and the second display and a field of view of a user of the tiling display, 3D model data to be displayed on the tiling display into first partial model data and second partial model data respectively corresponding to the first display and the second display, and

a transmission unit which transmits the first partial model data and the second partial model data respectively to the first display processing apparatus and the second display processing apparatus, wherein

the first display processing apparatus and the second display processing apparatus execute culling processing and rendering processing on the first partial model data and the second partial model data that have been received, and control display of the first partial model data and the second partial model data that have been subjected to the culling processing and the rendering processing, with respect to the first display and the second display.

FIG.1

Child PC 10 11

Controller

Culling processing unit 12 → Rendering processing unit 13 → Display control unit 14 → Display 15

Child PC 20 21

Controller

Culling processing unit 22 → Rendering processing unit 23 → Display control unit 24 → Display 25

Child PC

Controller

Culling processing unit → Rendering processing unit → Display control unit → Display

...

100

Parent PC 50 56

Controller

Visibility volume calculation unit 57 → Segmentation removal unit 58 → Boundary information setting unit 59

55

Display unit 51

Operation unit 52

Communication unit 53

Storage unit 54

FIG.2

15

1

3D model

Display position information:D

$D_{size}\ (\ D_{sizex}\ ,\ D_{sizey}\ )$
$D_{pos}\ (\ D_{posx}\ ,\ D_{posy}\ ,\ D_{posz}\ )$
$D_{rot}\ (\ D_{rotx}\ ,\ D_{roty}\ ,\ D_{rotz}\ )$
$D_{scale}\ (\ D_{scalex}\ ,\ D_{scaley}\ ,\ D_{scalez}\ )$

Model arrangement information:M

$M_{pos}\ (\ M_{posx}\ ,\ M_{posy}\ ,\ M_{posz}\ )$
$M_{rot}\ (\ M_{rotx}\ ,\ M_{roty}\ ,\ M_{rotz}\ )$
$M_{scale}\ (\ M_{scalex}\ ,\ M_{scaley}\ ,\ M_{scalez}\ )$

Y

Z

X

# FIG.3

$T_{min}$

$T_{max}$

$J_{min}$

$J_{max}$

Animation data : $A$

$$\{A_{j,t}\,(\,A_{posx}\,,\,A_{posy}\,,\,A_{posz}\,)\,|\,J_{min} \leqq j \leqq J_{max} \cap T_{min} \leqq t \leqq T_{max}\}$$

# FIG.4

Viewing range information:W

$$\{( W_x , W_y , W_z ) \mid W_{minx} \leqq W_x \leqq W_{maxx} \cap W_{miny} \leqq W_y \leqq W_{maxy} \cap W_{minz} \leqq W_z \leqq W_{maxz}\}$$

$( W_{maxx} , W_{maxy} , W_{maxz} )$

$( W_{minx} , W_{miny} , W_{minz} )$

# FIG.5

Start

Initialize visibility volume to 0 — ST101

Start processing of vertex of 3D model (v = 0) — ST102

next v

Start processing in viewing range
($W_x = W_{minx}$, $W_y = W_{miny}$,
$W_z = W_{minz}$) — ST103

next
$W_x, W_y, W_z$

Start processing in
animation data (t = $T_{min}$) — ST104

next t

Project vertices on display — ST105

If vertices are displayed on display,
add 1 to visibility volume — ST106

ST107

No ⟵ Processing in
animation data ended?

Yes — ST108

No ⟵ Processing in
viewing range ended?

Yes — ST109

No ⟵ Has processing of all
vertices been performed?

Yes

End

FIG.6

Display position information
$D_{size}$, $D_{pos}$, $D_{rot}$, $D_{scale}$

15

1

3D model projected on display

1

3D model

Vertex information of 3D model
$V_{posx}$, $V_{posy}$, $V_{posz}$

Viewing position
$W_x$, $W_y$, $W_z$

Model arrangement information
$M_{pos}$, $M_{rot}$, $M_{scale}$

FIG.7

FIG.8

$B_{min}$

Bone data
$\{B_b \mid B_{min} \leqq b \leqq B_{max}\}$

$B_{max}$

FIG.9

Start

Start processing of vertex of 3D model (v = 0) — ST301

Initialize flag2 — ST302

Start processing of bone (b = 0) — ST303

next v

next b

ST304

Weight information $VW_{v, b}$ larger than 0?

No

Yes

Set flag2 = 0 if cluster of bone is not 3D model removal target — ST305

ST306

Has processing of all bones been performed?

No

Yes

Remove relevant vertex when all bones are removal target (flag2 = 1) — ST307

ST308

Has processing of all vertices been performed?

No

Yes

End

FIG.10

Cluster:3
(Main area)

Cluster:2
(flag[2]=1)

Cluster:1
(flag[1]=1)

Cluster:0
(flag[0]=1)
(3D model removal)

Visibility Volume

th[0]=0

th[1]

th[2]

1

25

80

81

82

83

70

# FIG.11

Start

Start processing of cluster (n = 0) ——— ST401

Start processing of vertex
of 3D model (v = 0) ——— ST402

next n

Start processing within
animation data (t = Tmin) ——— ST403

next v

Update maximum value (Bnmax)
and minimum value (Bnmin) ——— ST404

next t

ST405

No

Processing within
animation data ended?

Yes

ST406

No

Has processing of all
vertices been performed?

Yes

Set boundary information for
each cluster ——— ST407

Yes

ST408

No

Has processing of all
clusters been performed?

Yes

End

# FIG.12

$B_{0max}(B_{0maxx}, B_{0maxy}, B_{0maxz})$

$B_{0min}(B_{0minx}, B_{0miny}, B_{0minz})$

$B_{1max}(B_{1maxx}, B_{1maxy}, B_{1maxz})$

$B_{1min}(B_{1minx}, B_{1miny}, B_{1minz})$

$B_{2max}(B_{2maxx}, B_{2maxy}, B_{2maxz})$

$B_{2min}(B_{2minx}, B_{2miny}, B_{2minz})$

Y

Z

X

FIG.13

FIG.14

EP 4 730 268 A1

FIG.15

FIG.16

FIG.17

EP 4 730 268 A1

EP 4 730 268 A1

500

501　　　　502　　　　503

| CPU | | ROM | | RAM |

504

505

Input/output interface

| Display unit | Operation unit | Storage unit | Communication unit | | Drive unit | 510 |

506　　　　507　　　　508　　　　509

| Removable recording medium | 511 |

FIG.18

## INTERNATIONAL SEARCH REPORT

<table>
<tr><td>International application No.<br><br>**PCT/JP2024/015970**</td></tr>
</table>

**A.    CLASSIFICATION OF SUBJECT MATTER**

*G06T 15/00*(2011.01)i; *G09G 5/00*(2006.01)i
FI:    G06T15/00 501; G09G5/00 510V; G09G5/00 550C

According to International Patent Classification (IPC) or to both national classification and IPC

**B.    FIELDS SEARCHED**

Minimum documentation searched (classification system followed by classification symbols)

G06T15/00; G09G5/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | WO 2020/241299 A1 (SONY CORPORATION) 03 December 2020 (2020-12-03)<br>entire text, all drawings | 1-10 |
| A | WO 2020/246296 A1 (SONY CORPORATION) 10 December 2020 (2020-12-10)<br>entire text, all drawings | 1-10 |
| A | JP 2022-502749 A (MAGIC LEAP INC.) 11 January 2022 (2022-01-11)<br>paragraphs [0134]-[0189], fig. 10-18 | 1-10 |
| A | JP 11-203449 A (HITACHI, LTD.) 30 July 1999 (1999-07-30)<br>entire text, all drawings | 1-10 |

☐ Further documents are listed in the continuation of Box C.    ☑ See patent family annex.

| | |
|---|---|
| *    Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **27 June 2024** | **09 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

| International application No. |
| --- |
| **PCT/JP2024/015970** |

| Patent document cited in search report | | | Publication date (day/month/year) | Patent family member(s) | | | Publication date (day/month/year) |
| --- | --- | --- | --- | --- | --- | --- | --- |
| WO | 2020/241299 | A1 | 03 December 2020 | (Family: none) | | | |
| WO | 2020/246296 | A1 | 10 December 2020 | US | 2022/0262284 | A1 | |
| | | | | entire text, all drawings | | | |
| JP | 2022-502749 | A | 11 January 2022 | US | 2020/0098173 | A1 | |
| | | | | paragraphs [0142]-[0206], fig. 10-18 | | | |
| | | | | WO | 2020/068878 | A1 | |
| | | | | CN | 113168737 | A | |
| JP | 11-203449 | A | 30 July 1999 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021103209 A